(19) Europäisches Patentamt
European Patent Office
Office européen des brevets

(11) **EP 3 567 367 B1**

(12) **EUROPEAN PATENT SPECIFICATION**

(45) Date of publication and mention
of the grant of the patent:
**04.08.2021 Bulletin 2021/31**

(51) Int Cl.:
***G01N 25/18*** (2006.01)

(21) Application number: **18900501.0**

(86) International application number:
**PCT/CN2018/085404**

(22) Date of filing: **03.05.2018**

(87) International publication number:
**WO 2019/136885 (18.07.2019 Gazette 2019/29)**

(54) **STEADY-STATE TEST METHOD FOR HEAT-CONDUCTING PROPERTY IN THE DIRECTION ALONG PLANE OF SHEET MATERIAL**

STATIONÄRES TESTVERFAHREN FÜR WÄRMELEITENDE EIGENSCHAFT IN DER RICHTUNG EINER FLACHMATERIALBAHN

PROCÉDÉ DE TEST EN RÉGIME PERMANENT DE PROPRIÉTÉ THERMOCONDUCTRICE DANS LA DIRECTION DANS UN PLAN DE MATÉRIAU EN FEUILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2018 CN 201810018047**

(43) Date of publication of application:
**13.11.2019 Bulletin 2019/46**

(73) Proprietor: **China Jiliang University
Hangzhou, Zhejiang 310018 (CN)**

(72) Inventors:
• **HOU, Dexin
Hangzhou, Zhejiang 310018 (CN)**
• **YE, Shuliang
Hangzhou, Zhejiang 310018 (CN)**

(74) Representative: **Sun, Yiming
HUASUN Patent- und Rechtsanwälte
Friedrichstraße 33
80801 München (DE)**

(56) References cited:
**EP-A2- 0 163 466       CN-A- 1 228 564
CN-A- 1 445 535        CN-A- 1 589 398
CN-A- 101 620 192      CN-A- 104 280 419
CN-A- 106 885 634      US-A- 5 297 868**

• **BAZINSKI S J ET AL: "Measuring and assessing the effective in-plane thermal conductivity of lithium iron phosphate pouch cells", ENERGY, ELSEVIER, AMSTERDAM, NL, vol. 114, 1 September 2016 (2016-09-01), pages 1085-1092, XP029780494, ISSN: 0360-5442, DOI: 10.1016/J.ENERGY.2016.08.087**

**Description**

**TECHNICAL FIELD**

The present invention relates to a method for testing heat-conducting performance of a material, and in particular, to a steady-state test method for in-plane heat-conducting performance of a sheet test sample, and may be applicable to a uniform or non-uniform, isotropic or anisotropic sheet with in-plane heat-conducting performance.

**RELATED ART**

Heat-conducting performance of a material is crucial to thermal design. An accurate test for the heat-conducting performance of the material is a basis for system design and a basis for production quality control. The heat-conducting performance of a material is generally expressed by a thermal conductivity and is seldomly characterized by a thermal diffusivity. In a case that a density and a specific heat capacity are known, one of the thermal conductivity and the thermal diffusivity can be calculated with the other being known.

There are many methods and standards for a heat-conducting performance test, but most of these methods are specific to traditional materials. It is generally required that a test sample be a uniform and isotropic material. With the development of technologies, various new materials and new processes have emerged, and some unsatisfactory test results are obtained by using a traditional method. In some applications, a geometrical size of a device in one dimension is obviously smaller than those in the other two dimensions, which shows a "thin" feature, for example, a thermal conduction graphite film and a thin-wall metal part fabricated by a process such as stamping or die casting. In many cases, heat-conducting performance of these materials is closely related to a structure and a molding process of a material. If a thick sample that meets test requirements is specially prepared, heat-conducting performance of the sample may differ from a heat-conducting performance of a material in an actual application. Therefore, a sheet sample needs to be directly tested.

A conventional test method for a sheet material is mainly a flash method, and the method is mainly used to test a longitudinal thermal conductivity. Thermal conductivity testers from some manufacturers include a special bracket, so that the flash method can be used to test a thermal -conductivity but there is a problem of poor accuracy and repeatability in practice. More importantly, the flash method is an unsteady method. For a composite material with a multilayer structure such as a thermally conductive graphite film, a thickness direction of the composite material cannot approximate to a uniform material. There is a deviation between a test result obtained by using the unsteady-state method and a test result obtained by using the steady-state method. However, in an actual application, these materials are generally in an approximately steady-state heat transfer state, and therefore the test results obtained by using the steady-state method can better reflect performance of the material in the actual application.

US 5 297 868 A discloses that In order to measure the in-plane thermal conductivity of a sample plate, the plate is placed in a prefabricated device containing a pair of thermocouples, a source of heat flow into the plate, a heat sink of the heat flow having an open cavity, a taut membrane, on which the source of heat flow and the thermocouples are bonded, located on the resilient filling, a resilient filling of thermally insulating material located underneath the membrane, in the cavity of the heat sink, and a thermally insulating medium covering the plate and exerting a compressive force on it.

CN 106 885 634 A discloses an unsteady wall heating flow distribution measurement method based on infrared thermography temperature measurement. The method is characterized by recording the time-varying temperature field of a heated wall by using infrared thermography; obtaining an unsteady heat balance equation because a selected object has a uniform wall thickness and is low in thermal resistance in the thickness direction and thus a wall heating problem can be simplified into two-dimensional unsteady heat transfer problem; then, taking the derivatives of the temperature field with respect to time and space, ignoring natural convection and heat radiation, and calculating a heating flow in two-dimensional distribution. The non-contact heat flow measuring method can measure the two-dimensional distribution of wall heat flow in real time.

A conventional steady-state test method for a thermal conductivity generally requires measuring heat flow density and a temperature gradient in a sample in a thermal equilibrium state, and the thermal conductivity is defined as a ratio of the heat flow density to the temperature gradient. Heat flow density at a test point generally cannot be directly measured, and needs to be estimated by using heat flow density on a reference material or by dividing total power of heat transfer flow by a cross-sectional area. Therefore, the conventional steady-state method generally requires that the heat flow density in the sample be uniformly distributed on a heat transfer section, and total power of heat flow on upstream and downstream sections in a heat conduction process remains consistent. To this end, many measures need to be taken in control of sample preparation and test conditions. For example, a sample heat transfer section size is large enough to reduce an influence of surface heat transfer, there is an enough distance from a heat source or contact surface to a temperature measurement point to eliminate an influence of uneven heating or uneven thermal resistance, and a surface is wrapped with an insulating material or heated for protection to improve uniformity and continuity of heat flow in the sample. However, for the in-plane thermal conductivity test of the sheet material, because the thickness direction of the sample has an extremely small size, total power of heat flow passing through the heat transfer section during heat transfer is extremely small, the surface heat loss has a great influence on the test, and it is difficult to ensure uniformity and continuity of the heat flow in the sample, which results in poor test accuracy and repeatability.

## SUMMARY

A technical problem to be solved by the present invention is to provide a steady-state test method for heat-conducting performance of a sheet material, which can reduce an influence of surface heat loss on a test.

A technical solution used by the present invention to solve the technical problem is as follows:
continuously locally heating a to-be-tested sheet by an electrical heating device at constant power and causing heat conduction in a plane direction; after the to-be-tested sheet reaches a thermal equilibrium state, measuring and recording surface temperature distribution of the to-be-tested sheet; selecting a section by completely cutting off the heat conduction area in a to-be-tested sheet as a test section, where an intersection line between the test section and a surface of the to-be-tested sheet is a test line; according to temperature field data on the surface of the to-be-tested sheet, calculating a temperature gradient of each point along a normal on the test line and integrate the temperature gradient along the test line, then multiplying a result of integration by a thickness of the sheet, and denoting a multiplied result as A; estimating total power of heat flow passing through the test section during the test, and denoting the total power of heat flow as PT; and dividing the PT by A to obtain a in-plane thermal conductivity of the sheet material.

Further, a reference sheet is prepared by using a reference material that has a known thermal conductivity and that has heat-conducting performance similar to that of the to-be-tested sheet, to replace the to-be-tested sheet for testing. Heating power is adjusted, and the temperature of the test section during the heating is checked until an average value of measured temperatures is with the same as that of the to-be-tested sheet during a test. The temperature gradient of each point along a normal on the test line is calculated, the temperature gradient along the test line is integrated, then the thickness of the sheet is multiplied by the thermal conductivity of the reference sheet, and a multiplied result is denoted as PTR. The heating power of the to-be-tested sheet during the test is denoted as PS, and the heating power of the reference sheet during the test is denoted as PSR. The method for calculating the total power of heat flow PT that is of the to-be-tested sheet and that passes through the test section during the test is: PT=PS-(PSR-PTR).

Further, for a to-be-tested sheet that has a significant difference in thermal conductivity in different regions of a plane, surfaces of the to-be-tested sheet are divided into a plurality of non-overlapping simply-connected regions, and a middle portion of each simply-connected region is locally heated until a thermal equilibrium state is reached. A closed loop line that encloses a heated region and that is located in the simply-connected region is selected as the test line, and a calculation result is an apparent thermal conductivity of the simply-connected region. All results of all the simply-connected regions are combined to obtain quantitative evaluation for spatial distribution of the thermal conductivity of the to-be-tested sheet.

Based on a same concept of the present invention, described herein are the following technical solutions for simultaneously measuring two thermal conductivities for a sheet material with thermal anisotropy.

A to-be-tested sheet is continuously heated at constant power, causing heat conduction in a plane direction. After the to-be-tested sheet reaches a thermal equilibrium state, surface temperature distribution of the to-be-tested sheet is measured and recorded, and then thermal conductivities in directions of the two principal heat transfer axes are calculated by using the following methods.

(1) A rectangular coordinate system is established on a to-be-tested sheet by using two orthogonal principal heat transfer axes of an X axis and a Y axis respectively, and thermal conductivities in the two directions are respectively denoted as Kx and Ky; and at least two sections for heat conduction in a completely cut to-be-tested sheet are selected as test sections, and an intersection line between the test section and a surface of the to-be-tested sheet is a test line, which is denoted as L(i), where i is a number for distinguishing different test lines.

(2) For each test line L(i), a temperature gradient of each point along the X axis and the Y axis on the test line is calculated, components of two temperature gradients along a normal of the test line are integrated along the test line, then a result of integration is multiplied by a thickness of the sheet, and results are denoted respectively as Ax(i) and Ay(i).

(3) Total power of heat flow passing through a test section corresponding to the test line L(i) during the test is estimated and denoted as PT(i).

(4) A linear equation set in two unknowns in the following form is solved, to obtain in-plane thermal conductivities Kx and Ky of the to-be-tested sheet along the two heat transfer axes: Kx * Ax(i) + Ky * Ay(i) = PT(i).

A beneficial effect of the present invention is that the present invention does not use a single-point heat flow density to calculate the thermal conductivity, but integrates the heat flow density on the heat transfer section, and uses the continuity of the total power of heat flow to calculate the thermal conductivity. Therefore, a uniform heat flow field is not required for the test. Requirements for the heat source are reduced, and thermal conductivity measurement can be performed based on an extremely small test region, which brings many benefits. First, because the surface heat loss and a heat dissipation area are positively correlated, reducing the test region can effectively reduce the surface heat loss. Second, a convection and radiation heat dissipation model on a surface of the test region is related to the surrounding environment, and therefore, a larger area leads to a more complicated interference factor. Reducing an area of the test region can improve stability and repeatability of the convection and radiation heat dissipation model, thereby improving accuracy of estimation for the surface heat loss of the test region. Third, because the test is conducted based on an extremely small test region, the test result represents only an apparent thermal conductivity of the material in the local region, and therefore the method can also be used to evaluate a distribution feature of the in-plane thermal conductivity of the non-uniform material in a plane.

## BRIEF DESCRIPTION OF THE DRAWINGS

FIG. 1 is a cross-sectional structure of a test system according to Implementation 1 of the present invention;

FIG. 2 shows surface region division of a sample when a thermal conductivity is calculated according to Implementation 1 of the present invention;

FIG. 3 is a cross-sectional structure of a test system according to Implementation 2 of the present invention;

FIG. 4 shows surface region division of a to-be-tested sample and a reference sample when a thermal conductivity is calculated according to Implementation 2 of the present invention;

FIG. 5 is a cross-sectional structure of a test system according to Implementation 3 of the present invention;

FIG. 6 is a schematic diagram of dividing surfaces of non-uniform to-be-tested sheets into a plurality of simply-connected regions in Implementation 3 of the present invention; and

FIG. 7 shows surface region division of a to-be-tested sheet when thermal conductivities in two plane directions are calculated in Implementation 4 of the present invention.

## DETAILED DESCRIPTION

In order to make the purpose, technical solutions and advantages of the present invention clear, the present invention is to be further described below with reference to the accompanying drawings.

Implementation 1

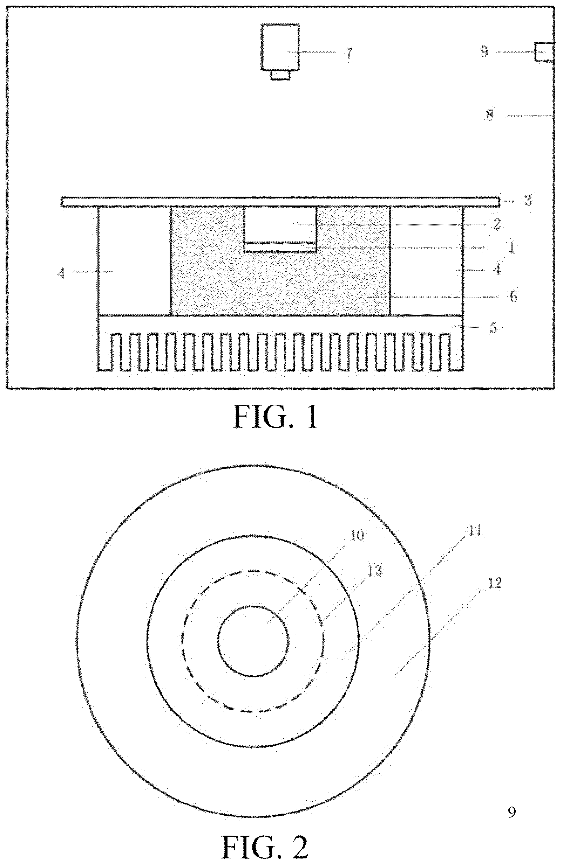

A cross-sectional structure of a test system is shown in FIG. 1. An electrical heating device 1 locally heats a middle portion of a to-be-tested sheet 3 by using a heat-conductive column 2 at constant power, and heat flows through a heat-conductive ring seat 4 to a heat sink 5. Peripheries of the electrical heating device 1 and the heat-conductive column 2 and a lower portion of the to-be-tested sheet 3 are filled with a heat insulating material 6. A thermal imager 7 faces the to-be-tested sheet 3, test device bodies are all located in a thermostat 8, and a temperature sensor 9 measures a temperature of the thermostat.

Surface regions of a sample are divided as shown in FIG. 2. A heating region 10 is located in a middle portion of the sample, a test region 11 encloses the heating region, and a heat dissipation region 12 is located at an outermost side. Both the heating region 10 and the heat dissipation region 12 have heat conduction in the direction of a vertical sheet surface, and the test region 11 may be approximated to only have in-plane heat conduction. A test line 13 located in a middle portion of the test region 11 is selected, and a heat transfer section of a vertical sheet surface corresponding to the test line completely cuts off heat conduction from the heating region 10 to the heat dissipation region 12.

Test steps are as follows:

(1) A surface of the to-be-tested sheet 3 is coated with a high-emissivity black-body coating and placed in the system shown in FIG. 1 for testing after being dry, and the surface coated with the black-body coating is oriented towards the thermal imager 7. Emissivity of the black-body coating should be calibrated in advance, or data from a black-body coating supplier is used, and the emissivity is provided to the thermal imager 7 to correct temperature measurement data.

(2) The electrical heating device 1 starts continuous heating at constant power, and the thermal imager 7 continuously collects surface temperature data of the to-be-tested sheet 3, and checks stability of the to-be-tested sheet until a temperature change at any point of the surface of the to-be-tested sheet 3 does not exceed 0.2°C for 5 continuous minutes. In this case, the sample is considered to reach a thermal equilibrium state, the surface temperature field data is recorded at this time, heating power PS of an electrical heating source 1 is recorded, and then a thermal conductivity of the to-be-tested sheet 3 is calculated.

The method for calculating the thermal conductivity is as follows:

(1) An integral of a temperature gradient on a test section is calculated, for each point on the test line 13, an outward temperature gradient of the point along a normal of the test line is calculated by using an adjacent point difference or a local curve fitting method and according to discrete temperature field data obtained through measurement by the thermal imager 7, a line integral of the temperature gradient along the test line is calculated by using a numerical integration method, and the calculated result is multiplied by a thickness of the sheet, to obtain a surface integral of the temperature gradient on the test section, and the surface integral is denoted as A.

(2) Heat loss power of a sample surface is calculated, and heat loss of a corresponding observation region of each pixel is estimated according to the sample surface temperature field data measured by the thermal imager 7, where radiation loss is:

$$\mathrm{PLR}(i,j) = \varepsilon\sigma\left(\mathrm{T}(i,j)^4 - \mathrm{T}_a^{\ 4}\right) \cdot \mathrm{S}$$

subscripts i and j are pixel coordinates of an observation point, T is a thermodynamic temperature of the observation point, $\mathrm{T}_a$ is a thermodynamic temperature of a thermostat, S is a sample surface region area corresponding to each pixel, $\varepsilon$ is the sample surface emissivity, and $\sigma$ is a Stefan-Boltzmann constant.

Convective loss is:

$$\mathrm{PLC}(i,j) = h_s \cdot \left(\mathrm{T}(i,j) - \mathrm{T}_a\right) \cdot \mathrm{S}$$

$h_s$ is a surface convective heat transfer coefficient, which may be set by experience, or determined according to simulation, or adjusted according to test results of some reference materials with known thermal conductivities. Heat loss PL of a sample surface during the test is a sum of radiant heat loss and convective heat loss at each point in the region enclosed by the test line, where

$$\mathrm{PL} = \sum_{(i,j)\in\Omega} \left(\mathrm{PLC}(i,j) + \mathrm{PLR}(i,j)\right)$$

$\Omega$ is a pixel point coordinate set in the region enclosed by the test line.

(3) The in-plane thermal conductivity is calculated, the heat loss power PL is subtracted from the heat source heating power PS, and then the subtracted value is divided by an integral value A obtained through calculation in step (1). The result is the thermal conductivity of the sheet sample.

Compared with a conventional method, the method does not need to achieve uniform heat flow, and therefore a length of the heat-conductive column, an area of a heating region, an area of the test region may be extremely small. For example, when a thermally conductive graphite film of a thickness of 50 micron is tested, a diameter of the heat-conductive column is 5 mm, the length of the heat-conductive column is 10 mm, and the test line is a ring that has a diameter of 10 mm and that is concentric with the heat-conductive column. A heat dissipating area through convection and radiation during the test is about 78.5 mm$^2$, and a contact area with the heat-insulating material is about 235.6 mm$^2$. Because a heat exchange area with the surrounding environment is reduced, the surface heat loss is extremely small. After the heating power is estimated and compensated through the heat loss, an estimation error of total power of heat flow passing through the test section may be extremely small, thereby improving test precision of the thermal conductivity. On the other hand, because test results represent apparent thermal conductivities of a material in an extremely small region, the test result may be used to quantitatively evaluate a size of the in-plane thermal conductivity of a non-uniform material in different regions.

Implementation 2

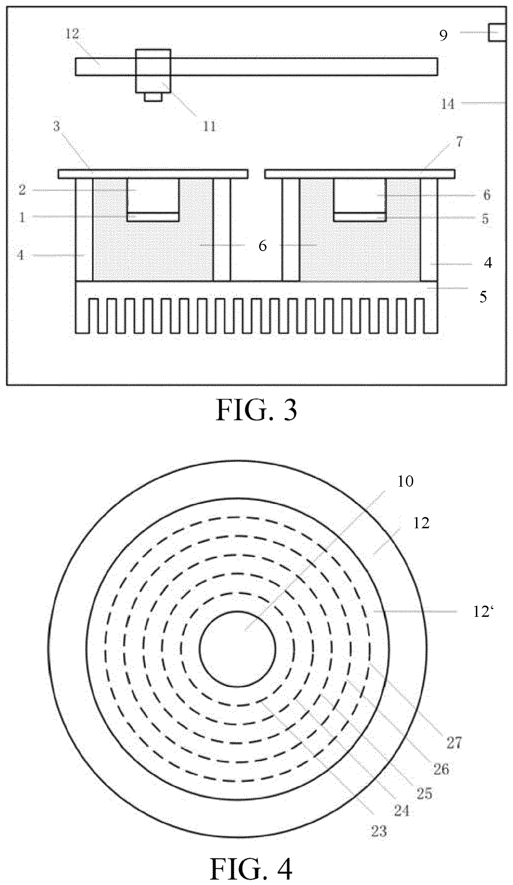

A cross-sectional structure of a test system is shown in FIG. 3. A primary electrical heating device 1 locally heats a middle portion of a to-be-tested sheet 3 by using a primary heat-conductive column 2 at constant power, and heat flows through a heat-conductive ring seat 4 to a heat sink 5. Symmetrically, a reference electrical heating device 15 locally heats a reference sheet 7 by using a reference heat-conductive column 6 at constant power, and heat flows through a heat-conductive ring seat 4 to a heat sink 5. Peripheries of the primary electrical heating device 1 and the primary heat-conductive column 2, a lower portion of the to-be-tested sheet 3, peripheries of the reference electrical heating device 15 and the reference heat-conductive column 16, and a lower portion of the reference sheet 17 are filled with a heat insulating material 6. A thermal imager 7 is installed on a one-dimensional translation stage 12, and may be moved back and forth right above the to-be-tested sheet 3 and the reference sheet 17 to measure temperature. Test device bodies are all located in a thermostat 8, and a temperature sensor 9 measures a temperature of the thermostat.
Surface regions of a sample are divided as shown in FIG. 4. A heating region 10 is located in a middle portion of the sample, a test region 22 encloses the heating region, and a heat dissipation region 12 is located at an outermost side. Both the heating region 10 and the heat dissipation region 12' have heat conduction in the direction of a vertical sheet surface, and the test region 22 may be approximated to only have in-plane heat conduction. Five test lines 23, 24, 25, 26, and 27 located in a middle portion of the test region 22 are selected, and heat transfer sections of vertical sheet surfaces corresponding to the five test lines completely cut off heat conduction from the heating region 10 to the heat dissipation region 12.
Test steps are as follows:

(1) One surface of the to-be-tested sheet 3 and the reference sheet 7 is coated with a high-em issivity black-body coating and placed in the system shown in FIG. 3 for testing after being dry, and the surface coated with the black-body coating is oriented towards the thermal imager 7. Emissivity of the black-body coating should be calibrated in advance, or data from a black-body coating supplier is used, and the emissivity is provided to the thermal imager 7 to correct temperature measurement data.

(2) The thermostat 8 starts performing temperature control, and adjusts an internal temperature of the thermostat 8 to a set test temperature.

(3) The primary electrical heating device 1 starts continuous heating at constant power, and the thermal imager 7 is moved right above the to-be-tested sheet 3, continuously collects surface temperature data of the to-be-tested sheet 3, and checks stability of the to-be-tested sheet until a temperature change at any point of the surface of the to-be-tested sheet 3 does not exceed 0.2°C for 5 continuous minutes. In this case, the sample is considered to reach a thermal equilibrium state, and the surface temperature field data is recorded at this time.

(4) The reference electrical heating device 14 starts heating at set power, and the thermal imager 7 is moved right above the reference sheet 7, continuously collects surface temperature data of the reference sheet 7, and checks stability of the reference sheet until a temperature change at any point of the surface of the reference sheet 7 does not exceed 0.2°C for 5 continuous minutes.

(5) Average temperatures of the reference sheet 7 and the to-be-tested sheet 3 in the heating region 10 and the test region 22 are compared, if a difference between the average temperatures is within 0.2°C, go to next step; otherwise, if the reference sheet 7 has a higher average temperature, heating power of the reference electrical heating source 5 is reduced, and then go to step (3); otherwise, the heating power of the reference electrical heating source 5 is increased, and then go to step 3.

(6) Current surface temperature field data of the to-be-tested sheet 3, surface temperature field data of the reference sheet 7, the heating power PS of the primary electrical heating source 1, the heating power PSR of the reference electrical heating source 5 are recorded, and then the in-plane thermal conductivity of the to-be-tested sheet 3 is calculated.

The method for calculating the thermal conductivity is as follows:

(1) An integral of a temperature gradient on the to-be-tested sheet 3 and the reference sheet 7 on each test section is calculated, for each of the test loop lines 23, 24, 25, 26, and 27, an outward temperature gradient of the point along a normal of the test line is calculated by using an adjacent point difference or a local curve fitting method and according to discrete temperature field data measured by the thermal imager 7, a line integral of the temperature gradient along the test line is calculated by using a numerical integration method, and the calculated result is multiplied by a thickness of the sheet, to obtain a surface integral of the temperature gradient on the test section. Results of the to-be-tested sheet 3 on the five test loop lines are denoted as AM(i), and results of the reference sheet 7 on the five test loop lines are denoted as AR(i), where i indicates a test line number with a value range from 1 to 5.

(2) Heat loss power of a surface of a reference sample 7 is calculated, and heat loss in reference sample 7 under test during heat transfer from a heat source 5 to five test loop lines is respectively:

$$\mathrm{PLR}\left(i\right) = \mathrm{PSR} - \mathrm{AR}\left(i\right) \cdot k_{ref}$$

$k_{ref}$ is a in-plane thermal conductivity of a reference sheet.

(3) The in-plane thermal conductivity of the to- be-tested sheet 3 is calculated as follows:

$$k_x = \frac{1}{5} \cdot \sum_{i=1}^{5} \frac{\mathrm{PS} - \mathrm{PLR}\left(i\right)}{\mathrm{AM}\left(i\right)}$$

For a difference between the total power of heat flow passing through the test section and the heating power of the heat source during the test, a part is dissipated to the surrounding environment through the surface of the sample, and the other part is dissipated to the heat insulating material. Because the to-be-tested sheet 3 and the reference sheet 7 have a symmetrical heat transfer path in this implementation, heat loss models of the to-be-tested sheet and the reference sheet are basically the same. The heating power is adjusted to make temperatures of the to-be-tested sheet and the reference sheet consistent, and the heat loss power is also basically the same. Heat loss on the reference sheet 7 may be calculated according to the known thermal conductivity of the reference material. The calculation result may approximate the heat loss power of the to-be-tested sheet 3 during the test, thereby reducing an influence of the heat loss on the test result of thermal conductivity. In addition, in this implementation, the thermal conductivity is calculated by using a plurality of test loop lines and then averaged, so that an influence of temperature measurement data noise can be reduced.

Implementation 3

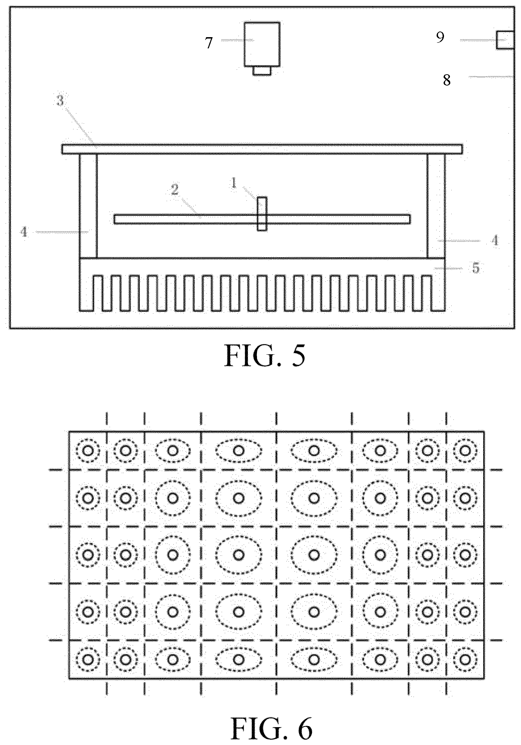

A sectional structure of a test system is shown in FIG. 5. A to-be-tested sheet 3 is arranged on a heat-conductive ring seat 4, and a laser light emitting component 1 is fixed on a two-dimensional motorized displacement stage 2, which can emit a circular spot laser having a diameter of 2 mm at constant power and project the laser onto a lower surface of the to-be-tested sheet 3. After the to-be-tested sheet is heated, heat passes through the heat-conductive ring seat 4 and flows to a heat sink 5. A thermal imager 7 is located right above the to-be-tested sheet 3, test device bodies are located in a thermostat 8, and a temperature sensor 9 measures a temperature of the thermostat.

In-plane thermal conductivities of the to-be-tested sheet 3 are unevenly distributed. According to resolution, surfaces of the to-be-tested sheet need to be divided into a series of non-overlapping simply-connected regions, such as an equidistant grid, or appropriately adjusted according to prior knowledge. For example, if it is considered that thermal conductivities at an edge are distributed more unevenly, grids are arranged more densely, or divided according to other qualitative evaluation results. An example of a regional division result is shown in FIG. 6, where a large solid rectangular frame indicates a to-be-tested sheet 3, and horizontal and vertical dotted lines indicate a divided simply-connected region boundary. When each simply-connected region is tested, the heating region are small solid circles in FIG. 6, and test loop lines are dotted ellipses or circles in FIG. 6.

Test steps are as follows:

(1) Two surfaces of the to-be-tested sheet 3 are coated with a high-emissivity black-body coating and placed in the system shown in FIG. 5 for testing after being dry. Emissivity of the black-body coating within a sensitive wavelength range of the thermal imager 7 and an absorption rate of a wavelength of the laser light 1 should be calibrated in advance, or data from a black-body coating supplier is used. Emissivity data is provided to the thermal imager 7 for correcting temperature measurement data, and the absorption rate data is used to correct actual effective heating power of the laser light 1.

(2) According to the preset division manner for simply-connected regions on surfaces of the to-be-tested sheet 3 shown in FIG. 6, a test is performed for the simply-connected regions one by one, and the following steps are performed for each currently selected region:

(2.1) The two-dimensional motorized displacement stage 2 is controlled, so that spots of the laser light 1 are projected to a center of the simply-connected region in a current test.

(2.2) The laser light 1 starts emitting light at constant power, and the thermal imager 7 continuously collects surface temperature data of the to-be-tested sheet 3, and checks stability of the to-be-tested sheet until a temperature change at any point of the surface of the to-be-tested sheet 3 does not exceed 0.2°C for 5 continuous minutes. In this case, the sample is considered to reach a thermal equilibrium state, the surface temperature field data is recorded at this time, and laser power PS is recorded.

(2.3) The method for calculating in-plane thermal conductivities of the to-be-tested sheet 3 is as follows:

(2.3.1) An integral of a temperature gradient on a specified section of a test loop line is calculated, for each point on the test loop line of a simply-connected region in the current test, an outward temperature gradient of the point along a normal of the test line is calculated by using an adjacent point difference or a local curve fitting method and according to discrete temperature field data measured by the thermal imager 7, an line integral of the temperature gradient along the test line is calculated by using a numerical integration method, and the calculated result is multiplied by a thickness of the sheet, to obtain a surface integral of the temperature gradient on the test section, and an obtained result is denoted as A.

(2.3.2) Heat loss power of a sample surface is calculated, and heat loss of a corresponding observation region of each pixel is estimated according to the sample surface temperature field data obtained through measurement by the thermal imager 7, where radiation loss is:

$$\mathrm{PLR}\left(i,j\right)=\varepsilon\sigma\left(\mathrm{T}\left(i,j\right)^{4}-\mathrm{T}_{a}^{\ 4}\right)\cdot\mathrm{S}$$

subscripts i and j are pixel coordinates of an observation point, T is a thermodynamic temperature of the observation point, $\mathrm{T}_a$ is a thermodynamic temperature of a thermostat, S is a sample surface region area corresponding to each pixel, $\varepsilon$ is the sample surface emissivity, and $\sigma$ is a Stefan-Boltzmann constant. Convective loss is:

$$\mathrm{PLC}\left(i,j\right)=h_{s}\cdot\left(\mathrm{T}\left(i,j\right)-\mathrm{T}_{a}\right)\cdot\mathrm{S}$$

$h_s$ is a surface convection heat transfer coefficient.

Heat loss PL of a sample surface during the test is a sum of radiant heat loss and convective heat loss at each point in the region enclosed by the test loop line:

$$\mathrm{PL}=\sum_{\left(i,j\right)\in\Omega}\left(\mathrm{PLC}(i,j)+\mathrm{PLR}\left(i,j\right)\right)$$

$\Omega$ is a pixel point coordinate set in the region enclosed by the test loop line.

(2.3.3) The in-plane thermal conductivity is calculated, laser heating power PS is multiplied by the absorption rate, the multiplied result is subtracted from the heat loss power PL obtained through calculation in step (2.3.2), and then the subtracted value is divided by an integral value A obtained through calculation in step (2.3.1). A result is an apparent thermal conductivity of the sheet sample 3 in the current test region.

(3) Test results of all the simply-connected regions are combined to obtain test results of distribution features of in-plane thermal conductivity of the entire to-be-tested sheet 3.

Compared with a conventional method, the method allows heat-conducting performance of a to-be-tested sheet sample to be non-uniform as a whole, and only requires the heat-conducting performance to be basically consistent within a small range, so that quantitative evaluation of spatial distribution of the heat-conducting performance can be obtained. For example, when a laser spot diameter is 2 mm, a test loop line having a diameter of 5 mm is selected, to obtain test results of spatial distribution of the in-plane thermal conductivities with a spatial resolution of 5 mm.

Implementation 4

A cross-sectional structure of a test system is shown in FIG. 1. An electrical heating device 1 locally heats a middle portion of a to-be-tested sheet 3 by using a heat-conductive column 2 at constant power, and heat flows through a heat-conductive ring seat 4 to a heat sink 5. Peripheries of the electrical heating device 1 and the heat-conductive column 2 and a lower portion of the to-be-tested sheet 3 are filled with a heat insulating material 6. A thermal imager 7 faces the to-be-tested sheet 3, test device bodies are all located in a thermostat 8, and a temperature sensor 9 measures a temperature of the thermostat.

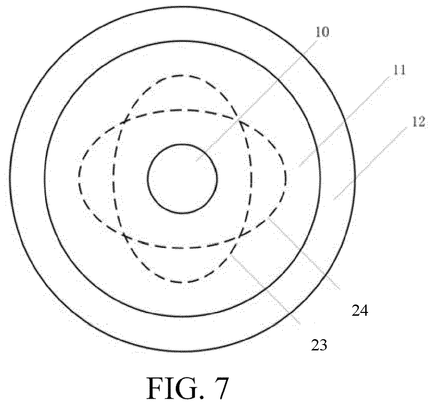

Surface regions of a sample are divided as shown in FIG. 7. A heating region 10 is located in a middle portion of the sample, a test region 11 encloses the heating region, and a heat dissipation region 12 is located at an outermost side. Both the heating region 10 and the heat dissipation region 12 have heat conduction in a direction of a vertical sheet surface, and the test region 11 may be approximated to only have in-plane heat conduction. Two test lines 23 and 24 located in a middle portion of the test region 11 are selected, heat transfer sections of vertical sheet surfaces corresponding to the test lines completely cut off heat conduction from the heating region 10 to the heat dissipation region 12, and both heat transfer sections are similar to an oval-shaped closed loop line, but long axes of the two test lines are perpendicular to each other.

Test steps are as follows:

(1) A surface of the to-be-tested sheet 3 is coated with a high-emissivity black-body coating and placed in the system shown in FIG. 1 for testing after being dry, and the surface coated with the black-body coating is oriented towards the thermal imager 7. Emissivity of the black-body coating should be calibrated in advance, or data from a black-body coating supplier is used, and the emissivity is provided to the thermal imager 7 to correct temperature measurement data.

(2) The electrical heating device 1 starts continuous heating at constant power, and the thermal imager 7 continuously collects surface temperature data of the to-be-tested sheet 3, and checks stability of the to-be-tested sheet until a temperature change at any point of the surface of the to-be-tested sheet 3 does not exceed 0.2°C for 5 continuous minutes. In this case, the sample is considered to reach a thermal equilibrium state, surface temperature field data is recorded at this time, heating power PS of an electrical heating source is recorded, and then a in-plane thermal conductivity of the to-be-tested sheet is calculated.

The method for calculating the thermal conductivity is as follows:

(1) A rectangular coordinate system is established on a to-be-tested sheet by using two orthogonal heat transfer axes of an X axis and a Y axis, respectively, and thermal conductivities in the two directions are respectively denoted as Kx and Ky.

(2) An integral of a temperature gradient on a test section is calculated, temperature gradients of each point along the X axis and Y axis on the test line 13 and test line 14 in FIG. 7 are calculated by using an adjacent point difference or a local curve fitting method and according to discrete temperature field data obtained through measurement by the thermal imager 7. Components of two temperature gradients along the normal of the test line are integrated along the test line, and then a result of integration is multiplied by a thickness of the sheet. Calculation results on the test line 13 are denoted as AX1 and AY1, and results on the test line 14 are denoted as AX2 and AY2.

(3) Total power of heat flow passing through corresponding test sections of the test line 13 and the test line 14 is estimated during the test, and heat loss of a corresponding observation region of each pixel is estimated according to sample surface temperature field data obtained through measurement by the thermal imager 7, where radiation loss is:

$$\mathrm{PLR}(i,j) = \varepsilon\sigma\left(\mathrm{T}(i,j)^4 - \mathrm{T}_a^{\ 4}\right)\cdot\mathrm{S}$$

subscripts i and j are pixel coordinates of an observation point, T is a thermodynamic temperature of the observation point, $\mathrm{T}_a$ is a thermodynamic temperature of a thermostat, S is a sample surface region area corresponding to each pixel, $\varepsilon$ is the sample surface emissivity, and $\sigma$ is a Stefan-Boltzmann constant.

Convective loss is:

$$\mathrm{PLC}(i,j) = \mathrm{h}_s\cdot\left(\mathrm{T}(i,j) - \mathrm{T}_a\right)\cdot\mathrm{S}$$

$h_s$ is a surface convection heat transfer coefficient;

A sum of radiant heat loss and convective heat loss in regions enclosed by test line 13 and test line 14 is calculated:

$$\mathrm{PL1} = \sum_{(i,j)\in\Omega1}\left(\mathrm{PLC}(i,j) + \mathrm{PLR}(i,j)\right)$$

$$\mathrm{PL2} = \sum_{(i,j)\in\Omega2}\left(\mathrm{PLC}(i,j) + \mathrm{PLR}(i,j)\right)$$

$\Omega1$ is a pixel point coordinate set in a region enclosed by the test line 13, and $\Omega2$ is a pixel point coordinate set in a region enclosed by the test line 14.

(4) The following equation set is solved:

$$\mathrm{Kx}\cdot\mathrm{Ax1} + \mathrm{Ky}\cdot\mathrm{Ay1} = \mathrm{PS} - \mathrm{PL1}$$

$$\mathrm{Kx}\cdot\mathrm{Ax2} + \mathrm{Ky}\cdot\mathrm{Ay2} = \mathrm{PS} - \mathrm{PL2}$$

solution results for unknown quantities Kx and Ky are in-plane thermal conductivities in directions of the X axis and Y axis.

In this implementation, two test lines with different shapes are constructed, and normal components that are the temperature gradient in the direction of the X axis and the temperature gradient in the direction of the Y axis are respectively integrated during integration. Therefore, heat flow components in the two directions can be distinguished, two equations with the thermal conductivities in the direction of a heat transfer axis as unknown quantities are established, and finally, a linear equation can be solved to obtain the thermal conductivities in the two directions.

**Claims**

1. A test method for a thermal conductivity of a sheet material, comprising: continuously locally heating a to-be-tested sheet (3) by an electrical heating device (1) at constant power, causing heat conduction in a plane direction; and after the to-be-tested sheet reaches thermal equilibrium, measuring and recording surface temperature distribution of the to-be-tested sheet; selecting a section by defining a test line on the surface of the to-be-tested sheet which completely surrounds the area heated by the electrical heating device; according to temperature field data on the surface of the to-be-tested sheet calculating a temperature gradient of each point along a normal on the test line, integrating the temperature gradient along the test line, then multiplying a result of integration by a thickness of the to-be-tested sheet, and denoting a multiplied result as A; estimating total power of heat flow passing through the test section during the test, and denoting the total power of heat flow as PT; and dividing the PT by A to obtain a in-plane thermal conductivity of the to-be-tested sheet material.

2. The test method according to claim 1, further comprising: preparing a reference sheet (16) by using a reference material that has a known thermal conductivity and that has heat-conducting performance similar to that of the to-be-tested sheet, to replace the to-be-tested sheet for testing; adjusting heating power and checking the temperature of the test section during the heating until an average value of measured temperatures is the same as that of the to-be-tested sheet during a test; calculating the temperature gradient of each point along a normal on the test line, integrating the temperature gradient along the test line, then multiplying a result of integration by a thickness of the reference sheet and a in-plane thermal conductivity of the reference sheet, and denoting a multiplied result as PTR; denoting the heating power of the to-be-tested sheet during the test as PS and the heating power of the reference sheet during the test as PSR, wherein a method for calculating the total power of heat flow PT that passes through the test section during the testing of the to-be-tested sheet is:

$$PT=PS-(PSR-PTR).$$

3. The test method according to claim 1, further comprising: for a to-be-tested sheet that has a significant difference in the in-plane thermal conductivity in different regions of a plane, dividing surfaces of the to-be-tested sheet into a plurality of non-overlapping simply-connected regions, locally heating a middle portion of each simply-connected region until a thermal equilibrium state is reached; and selecting a closed loop line that encloses a heated region and that is located within the simply-connected region as the test line, wherein a calculation result is an apparent in-plane thermal conductivity of the simply-connected region; combining results of all the simply-connected regions, to obtain quantitative evaluation for spatial distribution of the in-plane thermal conductivity of the to-be-tested sheet.

**Patentansprüche**

1. Prüfverfahren für eine thermische Leitfähigkeit eines Blattmaterials, umfassend: kontinuierliches lokales Erwärmen eines zu prüfenden Blattes (3) durch eine elektrische Heizvorrichtung (1) mit konstanter Leistung, wodurch eine Wärmeleitung in einer ebenen Richtung bewirkt wird; und nachdem das zu prüfende Blatt thermisches Gleichgewicht erreicht hat, Messen und Aufzeichnen der Oberflächentemperaturverteilung des zu prüfenden Blattes; Auswählen eines Abschnitts durch Definieren einer Prüflinie auf der Oberfläche des zu prüfenden Blattes, die den durch die elektrische Heizvorrichtung erwärmten Bereich vollständig umgibt; Berechnen eines Temperaturgradienten jedes Punktes entlang einer Normalen auf der Prüflinie gemäß Temperaturfelddaten auf der Oberfläche des zu prüfenden Blattes, wobei der Temperaturgradient entlang der Prüflinie integriert wird, anschließend ein Integrationsergebnis mit einer Dicke des zu prüfenden Blattes multipliziert wird und ein multipliziertes Ergebnis als A bezeichnet wird; Abschätzen der Gesamtleistung des Wärmestroms, der während der Prüfung durch den Prüfabschnitt fließt, und Bezeichnen der Gesamtleistung des Wärmestroms als PT; und Dividieren von PT durch A, um eine Wärmeleitfähigkeit in der Ebene des zu prüfenden Blattmaterials zu erhalten.

2. Prüfverfahren nach Anspruch 1, ferner umfassend: Erstellen eines Referenzblattes (16) unter Verwendung eines Referenzmaterials, das eine bekannte Wärmeleitfähigkeit und eine ähnliche Wärmeleitfähigkeit wie das zu prüfende Blatt aufweist, um das zu prüfende Blatt für die Prüfung zu ersetzen; Einstellen der Wärmeleistung und Überprüfen der Temperatur des Prüfabschnitts während der Erwärmung bis ein Mittelwert der gemessenen Temperaturen der gleiche ist wie der des zu prüfenden Blattes während einer Prüfung; Berechnen des Temperaturgradienten jedes Punktes entlang einer Normalen auf der Prüflinie, wobei der Temperaturgradient entlang der Prüflinie integriert wird, anschließend ein Integrationsergebnis mit einer Dicke des Referenzblattes und einer Wärmeleitfähigkeit in der Ebene des Referenzblattes multipliziert wird und das multiplizierte Ergebnis als PTR bezeichnet wird; Bezeichnen der Wärmeleistung des zu prüfenden Blattes während der Prüfung als PS und der Wärmeleistung des Referenzblattes während der Prüfung als PSR, wobei ein Verfahren zur Berechnung der Gesamtleistung des Wärmestroms PT, der während der Prüfung des zu prüfenden Blattes durch den Prüfabschnitt geht, ist:

$$PT=PS-(PSR-PTR).$$

**3.** Prüfverfahren nach Anspruch 1, ferner umfassend: für ein zu prüfendes Blattes, das einen signifikanten Unterschied in der Wärmeleitfähigkeit in der Ebene in verschiedenen Bereichen einer Ebene aufweist, Unterteilen von Oberflächen des zu prüfenden Blattes in mehrere nicht überlappende, einfach verbundene Bereiche, wobei ein mittlerer Abschnitt jedes einfach verbundenen Bereichs lokal erwärmt wird, bis ein thermischer Gleichgewichtszustand erreicht ist; und Auswählen einer geschlossenen Schleifenlinie, die einen erwärmten Bereich umschließt und die sich innerhalb des einfach verbundenen Bereichs als die Prüflinie befindet, wobei ein Berechnungsergebnis eine scheinbare Wärmeleitfähigkeit in der Ebene des einfach verbundenen Bereichs ist; Kombinieren der Ergebnisse aller einfach verbundenen Bereiche, um eine quantitative Auswertung für die räumliche Verteilung der Wärmeleitfähigkeit in der Ebene des zu prüfenden Blattes zu erhalten.

**Revendications**

**1.** Procédé de test d'une conductivité thermique d'un matériau en feuille, comprenant :

le chauffage local continu d'une feuille à tester (3) par un dispositif de chauffage électrique (1) à une puissance constante, générant une conduction de chaleur dans une direction plane ; puis, une fois que la feuille à tester a atteint un équilibre thermique, la mesure et l'enregistrement d'une distribution de température de surface de la feuille à tester ; la sélection d'une section par définition d'une ligne de test sur la surface de la feuille à tester, laquelle entoure complètement la zone chauffée par le dispositif de chauffage électrique ;
en fonction de données de champ de température sur la surface de la feuille à tester, le calcul d'un gradient de température de chaque point le long d'une normale sur la ligne de test, l'intégration du gradient de température le long de la ligne de test, puis la multiplication d'un résultat d'intégration par une épaisseur de la feuille à tester, et désignation d'un résultat multiplié comme A ; l'estimation de la puissance totale du flux thermique traversant la section de test pendant le test, et la désignation de la puissance totale du flux thermique comme PT ; et la division de PT par A pour obtenir une conductivité thermique dans le plan du matériau en feuille à tester.

**2.** Procédé de test selon la revendication 1, comprenant en outre: la préparation d'une feuille de référence (16) à l'aide d'un matériau de référence présentant une conductivité thermique connue et une performance thermoconductrice similaire à celle de la feuille à tester, afin de remplacer la feuille à tester pour le test ; le réglage de la puissance de chauffage et la vérification de la température de la section de test pendant le chauffage, jusqu'à ce qu'une valeur moyenne de températures mesurées soit identique à celle de la feuille à tester pendant un test ; le calcul du gradient de température de chaque point le long d'une normale sur la ligne de test, l'intégration du gradient de température le long de la ligne de test, puis la multiplication d'un résultat d'intégration par une épaisseur de la feuille de référence et par une conductivité thermique dans le plan de la feuille de référence, et la désignation d'un résultat multiplié comme PTR ; la désignation de la puissance de chauffage de la feuille à tester pendant le test comme PS et de la puissance de chauffage de la feuille de référence pendant le test comme PSR, dans lequel une méthode de calcul de la puissance totale du flux thermique PT traversant la section de test pendant le test de la feuille à tester est la suivante :

$$PT = PS-(PSR-PTR).$$

**3.** Procédé de test selon la revendication 1, comprenant en outre : pour une feuille à tester présentant une différence significative dans la conductivité thermique dans le plan dans différentes régions d'un plan, la division de surfaces de la feuille à tester en une pluralité de régions reliées simplement sans chevauchement, le chauffage local d'une partie centrale de chaque région reliée simplement jusqu'à l'atteinte d'un état d'équilibre thermique ; et la sélection d'une ligne en boucle fermée entourant une région chauffée et située dans la région reliée simplement comme étant la ligne de test, dans lequel un résultat de calcul est une conductivité thermique dans le plan apparente de la région reliée simplement ; la combinaison des résultats de toutes les régions reliées simplement, afin d'obtenir une évaluation quantitative pour la distribution spatiale de la conductivité thermique dans la plan de la feuille à tester.

FIG. 1

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5297868 A

- CN 106885634 A